# EUROPEAN PATENT SPECIFICATION

(11) **EP 3 376 370 B1**
(45) Date of publication and mention of the grant of the patent: **15.04.2020**
(21) Application number: 17192151.3
(22) Date of filing: 20.09.2017
(51) Int. Cl.: G06F 8/70

(54) **PROGRAM PRODUCING DEVICE AND PROGRAM**
PROGRAMMERZEUGUNGSVORRICHTUNG UND PROGRAMM
DISPOSITIF DE REPRODUCTION DE PROGRAMMES ET PROGRAMME

(30) Priority: 14.03.2017 JP 2017048515
(43) Date of publication of application: 19.09.2018
(73) Proprietor: Omron Corporation, Kyoto-shi, Kyoto 600-8530 (JP)
(72) Inventor: TAKAHASHI, Daisuke, Kyoto-shi, Kyoto 600-8530 (JP)
(74) Representative: Winter, Brandl, Fürniss, Hübner, Röss, Kaiser, Polte - Partnerschaft mbB

(56) References cited:
- ERIK H BAALBERGEN: "Design and Implementation of Parallel Make", COMPUTING SYSTEMS, vol. 1, no. 2, 1 January 1988 (1988-01-01) , pages 135-158, XP055455065,

## Description

### BACKGROUND OF THE INVENTION

### (1) Field of the Invention

The present invention relates to a program producing device and a program, particularly to a program producing device and a program for supporting development of an application program for an HMI (Human Machine Interface) applied to FA (Factory Automation).

### (2) Description of Related Art

A programmable terminal used in the field of the FA is a touch panel type input device. In the programmable terminal, a user (a person who designs or mounts the program of the programmable terminal) produces and displays a screen for the HMI so as to match with the user's purpose (specifications) and can input data.

Japanese Patent Application Laid-Open No. 2009-157533 discloses a technique related to the development of the application program (hereinafter, also referred to as an FA application) providing the FA. In Japanese Patent Application Laid-Open No. 2009-157533, when a control procedure program is compiled again, whether allocation of an address to a variable is changed is determined, and screen data corresponding to new address allocation is automatically produced.

The article by Erik H. Baalbergen, "Design and Implementation of Parallel Make", Computing Systems, Vol. 1, No. 2, 1 January 1988, pages 135 - 158, describes how to provide parallelism to the program "make" taking into consideration a "dependency-list" including "dependents".

### SUMMARY OF THE INVENTION

As to the FA application, programming in which the variable is used is becoming popular together with an IEC 61131-3 standard. In order to perform the program in which the variable is used at high speed, the variable is not solved during the execution but is solved when the program is compiled in advance. However, because the FA application, particularly the HMI application easily becomes a large-scale program, it sometime takes several minutes to compile the whole application.

In the development of the FA application, the application is produced and compiled, and the compiled application is transferred to a target device. The application is performed on the target device to check the operation of the device, and the application is corrected based on a checked defect. A series of work that the corrected application is compiled is repeated in a trial and error manner.

Accordingly, there is a demand for shortening a time required for compiling in order to efficiently develop the FA application. However, Japanese Patent Application Laid-Open No. 2009-157533 does not describes the method for shortening the time required for compiling.

An object of the present invention is to provide a program producing device and a program for shortening the time required for compiling of the HMI program. The object is solved by the features of the independent claims. The dependent claims are directed to preferred embodiments of the invention.

Preferably, the object detector detects a set of constituents that do not have the dependence relationship with each other as the object to be compiled in parallel in the plural constituents detected.

Preferably, a dependence relationship processor, which extracts the dependence relationship of the plural constituents detected as the object from the correlation information when the compiling is performed, is further provided.

Preferably, the object detector detects the constituents that become the object to be compiled in parallel based on the extracted dependence relationship.

Preferably, the compiling unit decides a compiling order of the plural constituents detected as the object based on the extracted dependence relationship.

Preferably, the object detector detects at least one constituent that becomes the object to be compiled from the plural constituents of the compiled program.

Preferably, the plurality of constituents of the program include a constituent shared with another program, and when the shared constituent is changed, a notification of the change content is output to another program.

Preferably, a compiling time is changed according to a change frequency with respect to each constituent of the program.

### BRIEF DESCRIPTION OF THE DRAWINGS

Fig. 1 is a view schematically illustrating a configuration of a programmable system according to a first embodiment;
Fig. 2 is a view schematically illustrating a configuration of a PC 100 of the first embodiment;
Fig. 3 is a view schematically illustrating a configuration of a programmable terminal 4 of the first embodiment;
Fig. 4 is a view schematically illustrating a development environment of an HMI program of the first embodiment;
Fig. 5 is a view illustrating an outline of compiling processing of the HMI program of the first embodiment;
Fig. 6 is a view schematically illustrating a configuration of a table TB for deciding a dependence relationship of the first embodiment;
Fig. 7 is a view illustrating the dependence relationship of the first embodiment;
Fig. 8 is a view schematically illustrating an example of a dependence relationship graph SG of the first embodiment;
Fig. 9 is a flowchart of recompiling object detection processing;
Fig. 10 is a view illustrating a state in which a constituent changed in the dependence relationship graph SG is specified;
Fig. 11 is a flowchart of parallel compiling object detection processing;
Fig. 12 is a view illustrating an example of a partial graph SG1;
Fig. 13 is a view illustrating a graph SG2 in which the partial graph SG1 is simplified;
Fig. 14 is a flowchart illustrating high-speed compiling processing of the first embodiment;
Fig. 15 is a view illustrating a compiling required time based on the dependence relationship in high-speed compiling; and
Fig. 16 is a view illustrating shortening of the compiling required time by parallel compiling of the first embodiment.

### DETAILED DESCRIPTION OF PREFERRED EMBODIMENTS

Hereinafter, embodiments will be described with reference to the drawings. In the following description, the same component or constituent is designated by the same reference numeral. The same component or constituent has the same name and function. Accordingly, the overlapping description will be omitted.

### [Description of Terms]

The terms used in each embodiment will be described below.

An "HMI program" is an application program. For example, the "HMI program" includes definition information about the HMI. The "HMI program" includes a disposition, a program code, and various pieces of setting data of an object such as an on-screen GUI (Graphical User Interface) necessary for operation of a programmable terminal.

The "definition information" includes a variable definition, a project entire definition, a page definition, an alarm definition, a data log definition, and a data group definition.

The "variable definition" is a set of definitions of variables used in the HMI program. For example, the variable definition includes a variable name and a type of each variable. The defined variable may include a classification of a PLC (Programmable Logic Controller) and information (such as an IP address and a variable or a memory address of the corresponding PLC) specifying a communication destination.

The "project entire definition" includes a definition (program code) of a function common to the entire of the HMI program, setting of the program code that should always be executed at constant time intervals, and setting of the program code that should be executed when a certain condition holds.

The "page definition" includes, according to each page included in the HMI program, a definition related to an appearance such as a shape, a place, and a color of a UI (User Interface) constituent (such as a button and a lamp) of the screen displayed by the page, setting of a program code executed when a certain condition holds during the display of the screen of the page, setting of a program code executed when the UI constituent of the page is operated, and a definition (a command code or a program code) of a function used only from the page.

The "alarm definition" defines data used to display a warning screen when a certain condition holds. For example, the alarm definition includes a conditional expression, a character string that is displayed on the screen or recorded in a history when the conditional expression holds, a specific page that is displayed when the conditional expression holds, and a warning level.

The "data log definition" indicates a definition related to a function of recording a specific variable and storing the specific variable in a file at constant time intervals or every time a condition holds. For example, the data log definition includes a variable of a log object, a log time interval, and a log conditional expression.

The "data group definition" includes a definition of a data group (a "set of non-array variables" or an "array variable") constituting a data series of a graph when the graph is displayed.

The "constituent" indicates an element constituting the HMI program. In the embodiments, the constituent of the HMI program is provided according to a predetermined particle size. For example, an individual page serves as the "constituent" in the page definition, the whole alarm definition serves as one "constituent" altogether in the alarm definition, and an individual variable serves as the "constituent" in the variable definition.

The "compiling unit" indicates an independently compilable unit. In the embodiments, the variable definition, the project entire definition, the page definition, the alarm definition, the data log definition, and the data group definition respectively correspond to the "compiling unit".

The "dependence relationship" means a relationship in which different "constituents" have an influence on each other. Specifically, the "dependence relationship" means a relationship (also referred to as propagation) that, in the case where the "constituent" of one of the pieces of definition information is changed, the change has an influence on the "constituent" of another piece of definition information.

"A propagation source and a propagation destination" mean A and B in the case where the change of one constituent (A) has an influence on another constituent (B) when attention is paid to a certain dependence relationship.

"A propagation form" means necessary operation related to the compiling even if the "constituent" of the propagation destination is not changed in the case where the "constituent" of the propagation source is changed. Examples of the "necessary operation" include recompiling and reinvestigation of a variable use situation.

The "recompiling" indicates that all or a part of the compiled HMI program is compiled again.

### [First Embodiment]

### (Outline)

In a first embodiment, a program producing device that processes the HMI (Human Machine Interface) program for the FA (Factory Automation) detects a constituent that becomes a next compiling object based on the dependence relationship between a change content of at least one constituent and plural constituents in the case where the at least one constituent of the compiled program is changed.

Thus, in the case where the program producing device recompiles the HMI program, the program producing device detects at least one constituent that should be recompiled in the plural constituents of the HMI program. Accordingly, the recompiling is not necessarily performed on all the constituents of the HMI program, so that the time required for compiling can be shortened.

### (System configuration)

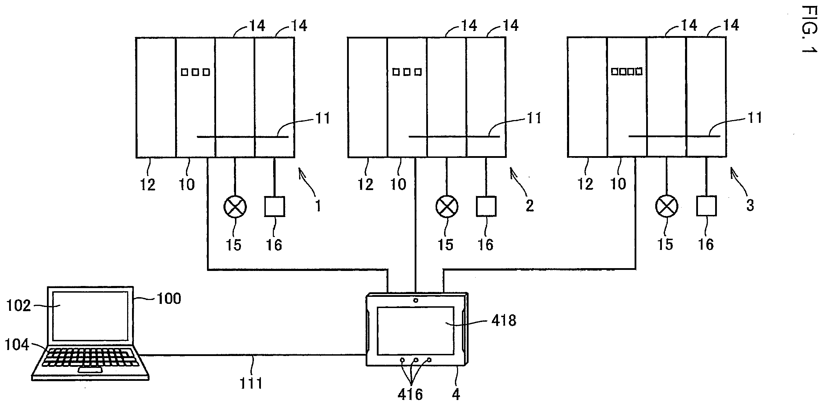

Fig. 1 is a view schematically illustrating a configuration of a programmable system of the first embodiment. Referring to Fig. 1, the programmable system includes PLC (Programmable Logic Controller) 1, a PLC 2, and a PLC 3, which are applied to the FA, a programmable terminal 4, and a PC (Personal Computer) 100. The PLCs 1 to 3 have the similar configuration. Typically, the PLC includes a CPU unit 10 including a CPU(Central Processing Unit) that serves as a main body executing a program, a power supply unit 12 that supplies power to the CPU unit 10, and an IO (Input Output) unit 14 that exchanges a signal with a field device. The IO unit 14 is connected to the CPU unit 10 through a system bus 11. Typically, the IO unit 14 obtains a signal from a detection sensor 15 that serves as the field device, or a drives a relay 16 that serves as the field device according to a program execution result of the CPU unit 10. The field device is not limited to the detection sensor 15 and the relay 16.

The programmable terminal 4 acts as a GUI (Graphical User Interface) for the HMI. The programmable terminal 4 performs various processing such as communication processing of communicating with the CPU units 10 of the PLCs 1 to 3, display processing of displaying information about each PLC on the display of a touch screen 418, and input processing of transmitting an operator's instruction input through operation keys 416 to the PLCs 1 to 3. The programmable terminal 4 displays on a display various screens including a GUI screen on which the communication processing, the display processing, and the input processing are performed.

The programmable terminal 4 executes the HMI program to generate screen data used to display the GUI screen, and the display is driven by the generated screen data to display the screen on the touch screen 418.

The PC 100 is an example of the program producing device that produces the HMI program. The processing of the HMI program includes a production (editing) of the HMI program and compiling. The PC 100 is connected to the programmable terminal 4 through a wired or wireless transmission channel 111. The PC 100 provides an environment in which a user produces the HMI program. The program produced by the PC 100 is transmitted to the programmable terminal 4. For example, the transmission channel 111 includes a LAN (Local Area Network).

### (Configuration of PC device 100)

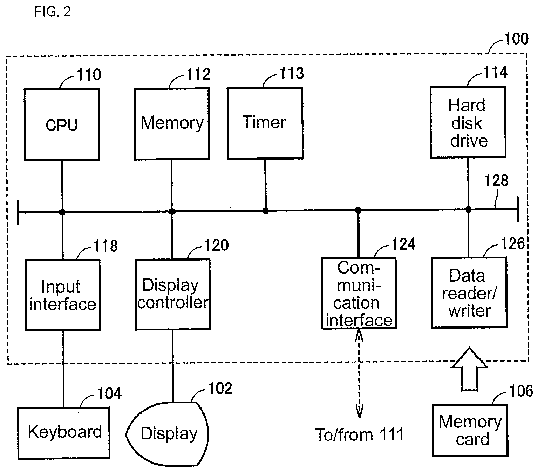

Fig. 2 is a view schematically illustrating a configuration of the PC 100 of the first embodiment. Referring to Fig. 2, the PC 100 includes a CPU 110, a memory 112 and a hard disk drive 114, which serve as a storage, a timer 113 that performs timing and outputs timing data to CPU 110, an input interface 118, a display controller 120, a communication interface 124, and a data reader/writer 126. These units are connected to one another though a bus 128 so as to conduct data communication with one another.

The CPU 110 performs various arithmetic operations by performing a program (code) stored in the hard disk drive 114. Typically, the memory 112 is a volatile storage device such as a DRAM (Dynamic Random Access Memory). Data and work data received from the data reader/writer 126 are stored in the memory 112, in addition to the program and data read from the hard disk drive 114.

The input interface 118 mediates data transmission between the CPU 110 and an input device such as a keyboard 104, a mouse (not illustrated), and a touch panel (not illustrated). That is, the input interface 118 receives an operation command, which is issued when the user operates the input device.

The display controller 120 is connected to a display 102 that is a typical example of the display device, and displays a processing result of the CPU 110. The display controller 120 drives the display 102 according to display data from the CPU 110. Therefore, an image corresponding to the display data is displayed on the display 102.

The communication interface 124 mediates the data transmission with the programmable terminal 4 through the LAN. The data reader/writer 126 mediates the data transmission between the CPU 110 and a memory card 106 that serves as an external storage medium.

The memory card 106 is distributed while the program executed by the PC 100 is stored in the memory card 106, and the data reader/writer 126 reads the program from the memory card 106. The memory card 106 is constructed with a general-purpose semiconductor storage device such as CF (Compact Flash) and SD (Secure Digital), a magnetic storage medium such as a flexible disk, or an optical storage medium such as CD-ROM (Compact Disk Read Only Memory).

Another output device such as a printer may be connected to the PC 100 as needed.

### (Configuration of programmable terminal 4)

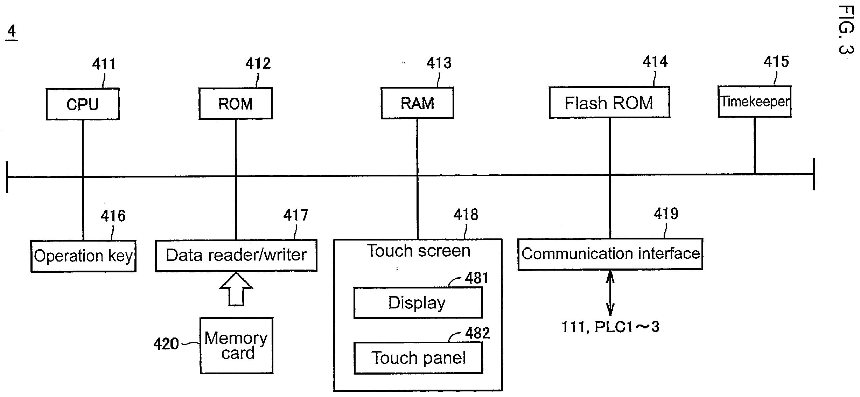

Fig. 3 is a view schematically illustrating a configuration of the programmable terminal 4 of the first embodiment. Referring to Fig. 3, the programmable terminal 4 includes a CPU 411 that performs various arithmetic operations, a ROM (Read Only Memory) 412, a RAM (Random Access Memory) 413, a flash ROM 414 in which various programs and data are stored in a nonvolatile manner, a timekeeper 415, an operation key 416 that receives an operator's operation, a data reader/writer 417, a touch screen 418, and a communication interface 419. These units are connected to one another through an internal bus.

The touch screen 418 includes a display 481 that acts as the display and a touch panel 482 that receives an operator's input. The touch panel 482 is provided so as to cover the display 481. The communication interface 419 communicates with the PC 100 and various devices of the PLCs 1 to 3.

The data reader/writer 417 mediates the data transmission between the CPU 411 and a memory card 420 that serves as the external storage medium. The memory card 420 can be distributed while the program executed by the programmable terminal 4 is stored in the memory card 420. The data reader/writer 417 reads the program from the memory card 420. The memory card 420 is constructed with a general-purpose semiconductor storage device such as CF (Compact Flash) and SD (Secure Digital), a magnetic storage medium such as a flexible disk, or an optical storage medium such as CD-ROM (Compact Disk Read Only Memory).

Another output device such as a printer may be connected to the programmable terminal 4 as needed.

### (Development environment of HMI program)

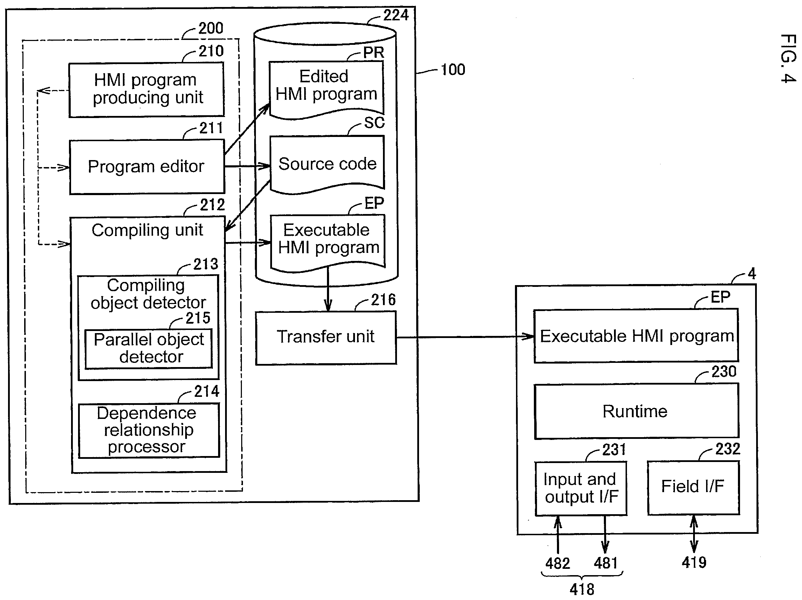

Fig. 4 is a view schematically illustrating a development environment of the HMI program of the first embodiment. Fig. 4 illustrates an execution environment of the HMI program in the programmable terminal 4 while the execution environment is correlated with the development environment in the PC 100.

Referring to Fig. 4, the PC 100 includes an HMI program development unit 200 that develops an OS(Operating System) and the HMI program. The HMI program development unit 200 includes an HMI program producing unit 210, a program editor 211, a compiling unit 212, and a transfer unit 216. The compiling unit 212 includes a compiling object detector 213 that detects the definition information of the compiling object and a dependence relationship processor 214 that detects and processes the dependence relationship between the definition information.

The HMI program producing unit 210 controls each unit of the HMI program development unit 200 according to a user's operation content received through the keyboard 104. The program editor 211 edits a HMI program PR according to the user's operation content received through the keyboard 104, and converts the edited HMI program PR into a source code SC of a predetermined HMI program description language. The program editor 211 stores the edited HMI program PR and the source code SC in the storage 224. The storage 224 includes the memory 112 or the hard disk drive 114.

The compiling unit 212 is a compiler for the HMI program description language, and complies the source code SC. The compiling generates an executable HMI program EP, and the executable HMI program EP is stored in the storage 224. The executable HMI program EP corresponds to an executable code that can be performed by a processor such as the PC 100 and the programmable terminal 4.

The HMI program includes plural constituents as described later.

The transfer unit 216 reads the executable HMI program EP from the storage 224 according to the user's operation content received through the keyboard 104, and transmits the read executable HMI program EP to the programmable terminal 4.

The compiling object detector 213 detects (extracts) at least one constituent as the compiling object from the source code SC. The compiling object detector 213 includes a parallel object detector 215 that detects a set of at least two constituents that can be compiled in parallel in the plural constituents of the compiling objects.

In the first embodiment, the executable code of the executable HMI program EP obtained through the compiling is a code in which a program logic structure including the dependence relationship is easily extracted by scanning of the executable code.

The compiling unit 212 compiles the source code SC, and outputs the executable HMI program EP that is of a compiling result. The output executable HMI program EP is stored in the storage 224. Specifically, when the compiling object detector 213 detects at least one constituent, the compiling unit 212 compiles the at least one constituent of the plural constituents of the source code SC. When the parallel object detector 215 detects the set of at least two constituents that can be compiled in parallel, the compiling unit 212 compiles the detected set of at least two constituents in parallel.

The dependence relationship processor 214 obtains the dependence relationship between the constituents from the executable HMI program EP. Specifically, the executable HMI program EP is analyzed to extract the dependence relationship between the constituents, a dependence relationship graph SG is generated based on an extraction result, and the generated dependence relationship graph SG is stored in the storage 224.

The transfer unit 216 reads the executable HMI program EP of the hard disk drive 114, and transfers (transmits) the read executable HMI program EP to the programmable terminal 4.

Each unit of the HMI program development unit 200 and the transfer unit 216 are constructed with a program or a combination of a program and a circuit. The program is loaded from the hard disk drive 114 to the memory 112, and executed by the CPU 110 through the OS. The PC 100 includes a library (not illustrated) including a UI (User Interface) library used to produce the executable HMI program EP, a resource, and a function.

The programmable terminal 4 receives the executable HMI program EP from the PC 100. The programmable terminal 4 includes a runtime 230 constructed with a software component executing the executable HMI program EP, an input and output I/F (Interface) 231 that inputs and outputs data to and from the touch screen 418, and a field I/F 232 that communicates with each PLC through the communication interface 419.

The programmable terminal 4 stores the executable HMI program EP transferred from the PC 100 in the flash ROM 414. When the user of the programmable terminal 4 issues an instruction to execute the HMI program, the executable HMI program EP is read from the flash ROM 414 under the control of an OS (not illustrated) of the programmable terminal 4, and the runtime 230 executes the read executable HMI program EP.

The runtime 230 executes the executable HMI program EP using data input from the touch screen 418 through the input and output I/F 231 or the data input from the PLC through the communication interface 419. The runtime 230 displays an execution result (output) of the executable HMI program EP on the touch screen 418 through the input and output I/F 231, and outputs the execution result to the PLC through the communication interface 419.

The user checks the display content of the touch screen 418 or the operation of the PLC based on the execution result of the executable HMI program EP.

In Fig. 4, the programmable terminal 4 is used as the execution environment of the HMI program. However, the execution environment is not limited to the programmable terminal 4. For example, in the case where the PC 100 includes the execution environment of the HMI program similarly to the programmable terminal 4, the PC 100 can execute the executable HMI program EP.

### (Outline of HMI program compiling processing)

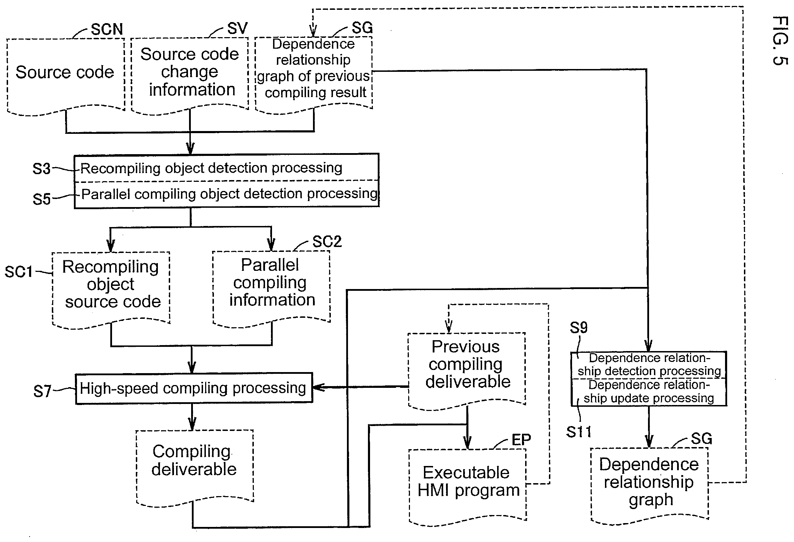

Fig. 5 is a view illustrating an outline of compiling processing of the HMI program of the first embodiment. Fig. 5 illustrates the case that, when editing (changing) the compiled source code SC through the program editor 211, the user compiles (also referred to as recompiles) an edited source code SCN.

In Fig. 5, the program editor 211 edits (changes) the source code SC of the storage 224 according to the user's operation content, obtains the edited source code SCN, and stores the edited source code SCN in the storage 224. Specifically, the program editor 211 receives the user's operation content for the editing, and stores an editing content in the storage 224. The editing content includes source code change information SV in which the changed program constituents are listed. The dependence relationship graph SG is information indicating the dependence relationship between the plural constituents of the HMI program, generated by the dependence relationship processor 214 every time the compiling is performed, and stored in the storage 224. Details of the dependence relationship graph SG will be described later.

When an instruction to start the compiling of the HMI program is issued, the compiling object detector 213 detects (extracts) the constituent as the compiling object from the source code SCN (step S3). The parallel object detector 215 detects (extracts) at least two constituents that can be compiled in parallel in the constituents detected by the compiling object detector 213 (step S5).

The compiling object detector 213 outputs a source code SC1 corresponding to the constituent of the recompiling object from the source code SCN based on the detection result, and stores the source code SC1 in the storage. The parallel object detector 215 outputs parallel compiling information SC2 indicating the set of constituents that can be compiled in parallel based on the detection result.

The compiling unit 212 complies not all the constituents of the source code SCN, but the source code SC1 of the constituent of the recompiling object, thereby implementing the compiling faster than the compiling of the whole source code SCN (step S7). In the case where the parallel compiling information SC2 is output in step S7, the compiling unit 212 complies the set of constituents indicated by the parallel compiling information SC2 in parallel.

The compiling unit 212 outputs a compiling deliverable that is of a compiling result. The compiling deliverable includes the executable HMI program EP, and the compiling deliverable is stored in the storage.

The dependence relationship processor 214 detects (extracts) the dependence relationship between the constituents from the compiling deliverable (step S9), and updates (changes) the original dependence relationship graph SG such that the detected dependence relationship is indicated (step S11). The updated dependence relationship graph SG is stored in the storage 224, and referred to in the next compiling (recompiling).

### (Table TB for deciding dependence relationship)

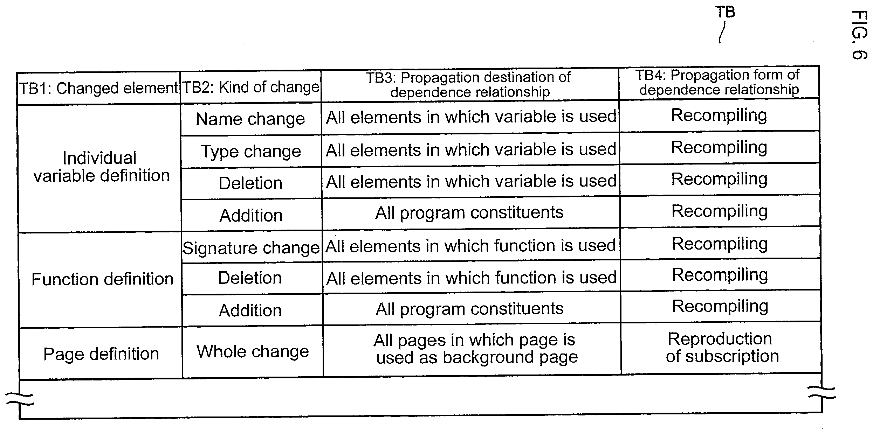

Fig. 6 is a view schematically illustrating a configuration of a table TB for deciding a dependence relationship of the first embodiment. The table TB is previously stored in the storage 224 of the PC 100. In the first embodiment, the dependence relationship processor 214 decides the dependence relationship based on the information about the table TB. The table TB corresponds to correlation information in which a change content of each constituent is correlated with another constituent on which the change has an influence.

Referring to Fig. 6, the table TB includes a kind TB1 of the constituent, a kind TB2 of the change that can be performed on the constituent, a propagation destination TB3 of the dependence relationship, and a propagation form TB4 of the dependence relationship while the kind TB1, the kind TB2, the propagation destination TB3, and the propagation form TB4 are correlated with each constituent (corresponding to the definition information) of the HMI program.

In the table TB, the variable definition, the function definition, and the page definition are illustrated as the kind TB1 of the constituent, but the data can be similarly registered with respect to another kind of the constituent.

As illustrated in Fig. 6, the kind TB2 of the change depends on the kind TB1 of the corresponding constituent. For example, in the case where the kind TB1 of the constituent is the individual variable definition, the kind TB2 of the change includes a name change, a type change, and deletion and addition.

The propagation destination TB3 of the dependence relationship indicates the constituent to which the influence of the change is propagated (the constituent that the change affects) while the constituent is correlated with each of the kind TB2 of the corresponding change. The propagation form TB4 of the dependence relationship indicates some sort of operation (the recompiling and the reinvestigation of the variable use situation) necessary for the compiling while the operation is correlated with each of the corresponding propagation destination TB3.

In the first embodiment, the content of the table TB may be fixed or changeable. For example, in the case where the HMI program includes a structure variable produced by the user, the program producing device can register the kind TB2 of the change (such as a member change), the propagation destination TB3, and the propagation form TB4 with respect to the structure variable.

### (Notation of dependence relationship)

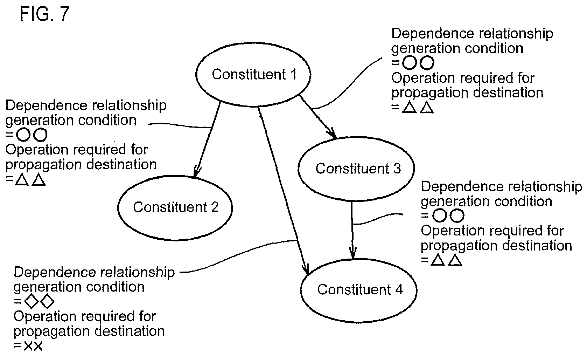

Fig. 7 is a view illustrating the dependence relationship of the first embodiment. For example, the dependence relationship between the constituents is indicated by a directed graph. Here, the constituent constitutes a node of the directed graph, and the dependence relationship constitutes a side of the directed graph. A generation condition of the dependence relationship and information about the operation necessary for the propagation destination are added to the side. The generation condition and the operation correspond to the kind TB2 of the change and the propagation form TB4 in Fig. 6, respectively.

The dependence relationship (the generation condition and the operation) between the nodes, the node of the propagation source of each dependence relationship, and the node of the propagation destination can be detected (extracted) by tracing the side of the directed graph. The node that does not constitute the propagation destination of the dependence relationship is detected, and all the nodes that are passed through when all the dependence relationships are reflexively traced in the direction from the propagation source to the propagation destination when attention is paid to a certain node are detected so as to be the constituents that are not changed after the previous compiling is completed. A compiling unit constructed only with the constituent corresponding to the detected node corresponds to a compiling unit in which the compiling can be performed in parallel.

The directed graph of the dependence relationship in Fig. 7 is stored in the storage so as to be reused (read).

### (Dependence relationship detection processing)

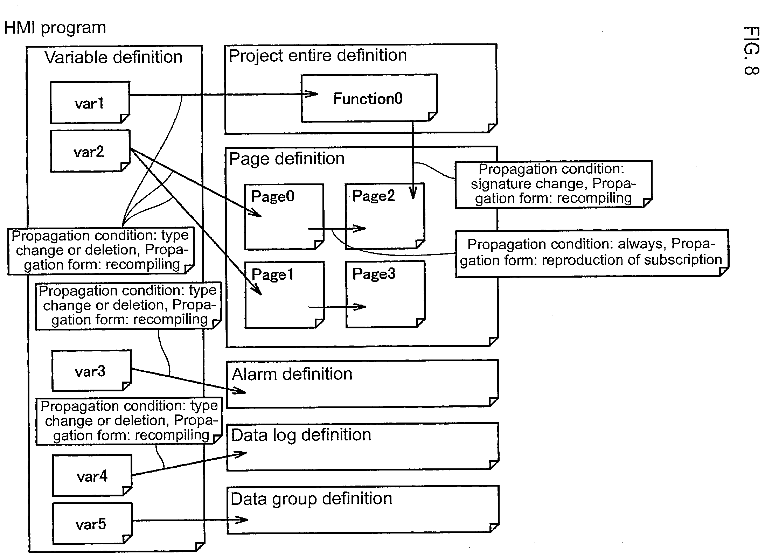

Fig. 8 is a view schematically illustrating an example of the dependence relationship graph SG of the first embodiment. The dependence relationship processor 214 analyzes the executable HMI program EP, extracts the constituents (such as the variable, the function, and the page) and a call relationship between the constituents based on an analysis result, and searches the table TB based on each of the extracted constituents. Through the search, the dependence relationship processor 214 extracts the kind TB2 of the change corresponding to the kind TB1 of the constituent, the propagation destination TB3, and the propagation form TB4 from the table TB, and generates the dependence relationship graph SG that is of the directed graph based on the extracted information (see Fig. 8). Data of a list structure indicating the generated dependence relationship graph SG is stored in the storage.

Referring to Fig. 8, for example, in the case where the variable var1 and variable var2 of the variable definition are set to the propagation source, the propagation destination of the dependence relationship graph SG is the function (Functio0) or the page (such as Page0 or Pagel), and the propagation condition (such as the change or the deletion) and the propagation form (such as the recompiling) are correlated with the dependence relationship.

Alternatively, the dependence relationship processor 214 may similarly analyze the dependence relationship only with respect to the recompiled constituent, and change the original dependence relationship graph SG based on the analysis result. In this case, the processing of changing the dependence relationship graph SG can quickly be performed compared with the case that the whole HMI program is analyzed again.

### (Fragmentation of constituent)

In the first embodiment, with respect to the particle size of the "constituent" of the HMI program, the program constituent is divided until the compiling unit cannot be miniaturized into a smaller size. According to the division of the particle size, for example, the individual page in the page definition is each "constituent", all the alarm definitions in the alarm definition is one "constituent", and the individual variable in the variable definition is the "constituent". In the first embodiment, the particle size of the "constituent" is previously decided. Alternatively, the particle size of the constituent may be decided so as to be optimum to the configuration of the HMI program produced by the user.

### (Recompiling object detection processing)

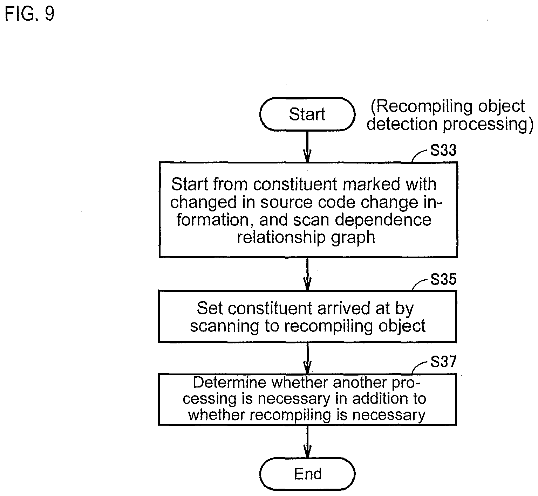

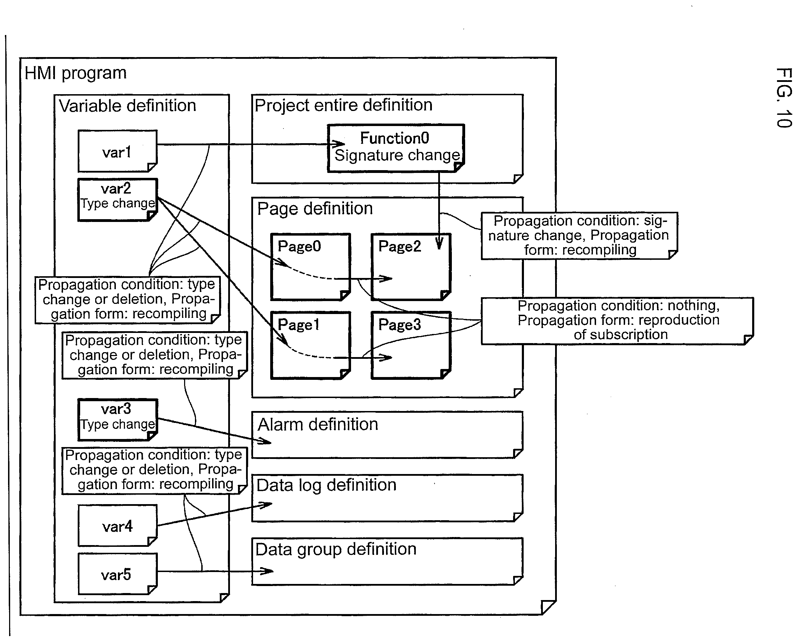

In the first embodiment, the compiling object detector 213 scans the source code SCN according to the dependence relationship graph SG and the source code change information SV, and detects (extracts) the constituent in which the recompiling is required based on a scanning result. Fig. 9 is a flowchart of recompiling object detection processing. Fig. 10 is a view illustrating a state in which a constituent changed in the dependence relationship graph SG is specified.

The compiling object detector 213 extracts the changed constituent indicated by the source code change information SV in the constituents of the propagation sources, and starting from the node corresponding to the extracted constituent, reflexively scans the dependence relationship graph SG in the direction from the propagation source to the propagation destination of the dependence relationship as long as the charge performed on the constituent corresponding to the node corresponds to the generation condition of the dependence relationship (step S33).

The compiling object detector 213 decides all the constituents corresponding to the nodes arrived at by tracing the dependence relationship graph SG as the recompiling object, and stores all the constituents in the storage 224 as the compiling object information (step S35).

The compiling object detector 213 may determine whether another processing is necessary in addition to whether the recompiling is necessary (step S37).

For example, the determination processing in step S37 includes a determination as to whether the changed constituent indicated by the source code change information SV is the constituent in which the previous compiling result can directly be used, the constituent in which the recompiling is necessary, or the constituent in which the recompiling is not necessary but another processing is necessary.

The recompiling object information obtained by the compiling object detector 213 will be described below. As illustrated in Fig. 7, the source code change information SV includes a function Function0 of the project entire definition and variables var2, var3 of the variable definition as the changed constituent. The kind of the change of the function Function0 indicates "a signature change", and the kinds of the changes of the variables var2, var3 indicate "a type change".

First, starting from the node corresponding to the changed function Function0 in the dependence relationship graph SG, the compiling object detector 213 reflexively traces the side with which the "signature change" is correlated to a terminal end in the direction from the propagation source to the propagation destination of the dependence relationship. Therefore, Page2 of the page definition is detected as the recompiling object. Similarly, starting from the node corresponding to the variable var2, the compiling object detector 213 reflexively traces the side with which the "type change" is correlated to the terminal end in the direction from the propagation source to the propagation destination of the dependence relationship. Therefore, Page0, Page1, Page2, and Page3 of the page definition are detected as the recompiling object. Similarly, starting from the node corresponding to the variable var3, the compiling object detector 213 reflexively traces the side with which the type change is correlated to the terminal end in the direction from the propagation source to the propagation destination of the dependence relationship. Therefore, the alarm definition is detected as the recompiling object.

Accordingly, the recompiling object information based on the dependence relationship graph SG in Fig. 7 and the source code change information SV indicates the changed variables var2 and var3, the function Function0 of the propagation destination, the pages Page0, Page1, Page2, and Page3, and the alarm definition as the recompiling object.

In the embodiment, the compiling unit (the variable definition, the project entire definition, the page definition, and the alarm definition) including these constituents are set to the recompiling object. Therefore, the data log definition and the data group definition can be removed from the compiling object, so that the compiling required time can be shortened compared with the case that the whole is compiled.

### (Parallel compiling object detection processing)

In the first embodiment, the parallel object detector 215 detects the constituents that can be compiled in parallel in the constituents of the recompiling objects based on the recompiling object information output from the compiling object detector 213.

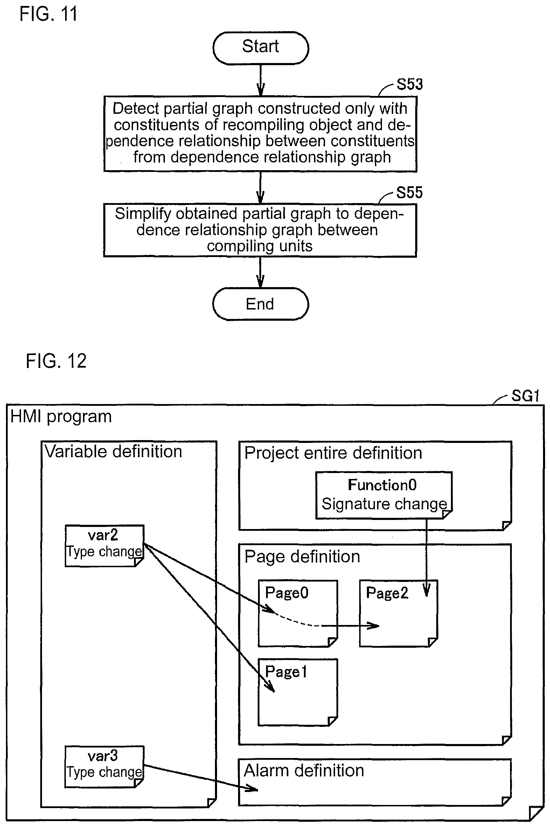

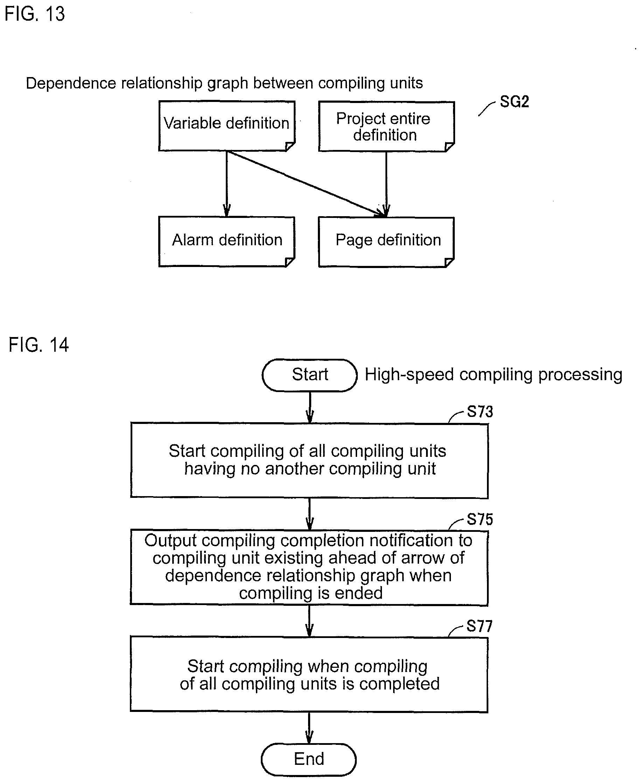

Fig. 11 is a flowchart of parallel compiling object detection processing. Fig. 12 is a view illustrating an example of a partial graph SG1. Fig. 13 is a view illustrating a graph SG2 in which the partial graph SG1 is simplified. The parallel object detector 215 extracts the partial graph SG1 (see Fig. 12) constructed with the constituents of the recompiling object and the dependence relationship between the constituents from the dependence relationship graph SG based on the recompiling object information (step S53).

The parallel object detector 215 converts the partial graph SG1 in Fig. 9 into the graph SG2 (see Fig. 13) that is simplified so as to indicate the dependence relationship between the constituents (step S55).

The dependence relationship indicated by the graph SG2 in Fig. 13 indicates the dependence relationship among the variable definition, the alarm definition, and the page definition, and the dependence relationship between the project entire definition and the page definition.

Generally, the dependence relationship exists between the variable definition and the project entire definition of the HMI program, and the variable definition and the project entire definition cannot be compiled in parallel. However, in the dependence relationship in Fig. 13, although the variable definition is changed, the variable is not used in the project entire definition. Therefore, the parallel compiling can be performed this time.

The parallel object detector 215 stores the data of the list structure of the graph SG2 that is of the simplified dependence relationship graph in the storage 224.

### (High-speed compiling)

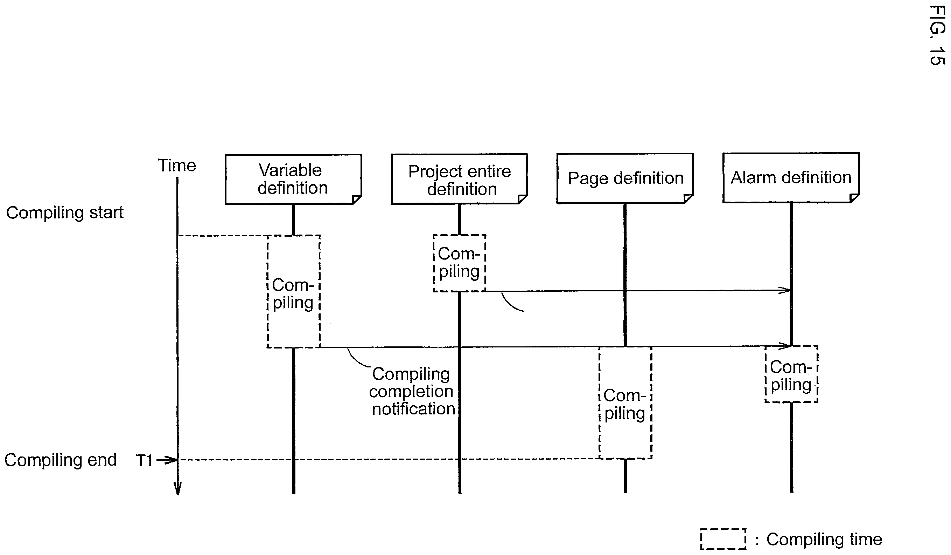

Fig. 14 is a flowchart illustrating high-speed compiling processing of the first embodiment. Fig. 15 is a view illustrating a compiling required time based on the dependence relationship in high-speed compiling. The processing of compiling the source code SCN by the compiling unit 212 based on the graph SG2 will be described with reference to Figs. 14 and 15.

Based on the graph SG2 in Fig. 13, the compiling unit 212 extracts, as the compiling unit, the codes of the definition information that do not have the dependence relationship and do not serve as the propagation destination of the dependence relationship from the source code SCN. That is, in the nodes of the graph SG2, a source code of the definition information corresponding to the node that does not have the flowing-in side is extracted as the compiling unit. In the graph SG2 of Fig. 13, the source codes of the project entire definition and variable definition are extracted in parallel as the compilable compiling unit.

The compiling unit 212 starts compiling the compiling units of the extracted project entire definition and variable definition in parallel (step S73).

When determining that compiling of each compiling unit is ended, the compiling unit 212 outputs a "compiling completion notification" to the compiling unit of the definition information that serves as the propagation destination in the graph SG2 (step S75).

Referring to Fig. 15, the parallel compiling of the compiling units of the variable definition and project entire definition is started. When the compiling is ended, the "compiling completion notification" is output to the compiling unit corresponding to the next node of the list. In Fig. 15, the compiling of the compiling unit of the variable definition is ended, and then the compiling of the compiling unit of the project entire definition is ended. In the list of the graph SG2, the "compiling completion notification" is output from the compiling unit of the variable definition to the compiling units of the alarm definition and page definition, and the "compiling completion notification" is output from the compiling unit of the project entire definition to the compiling unit of the alarm definition.

The compiling unit 212 starts the compiling of the compiling unit of the alarm definition when the "compiling completion notifications" are output from both the variable definition and the project entire definition based on the dependence relationship of the graph SG2 (more specifically, when the "compiling completion notification" is output from the variable definition in Fig. 15). When the "compiling completion notification" is output from the variable definition, the compiling of the compiling unit of the page definition is started (step S77).

As described above, based on the dependence relationship of the graph SG2, the compiling unit 212 can decide a compiling order of the plural constituents indicated by the graph SG2, and perform the compiling in the decided order.

In the compiling including the parallel compiling based on the graph SG2 in Fig. 12, all the constituents detected as the recompiling object can be recompiled within time T1.

### (Shortening of compiling required time)

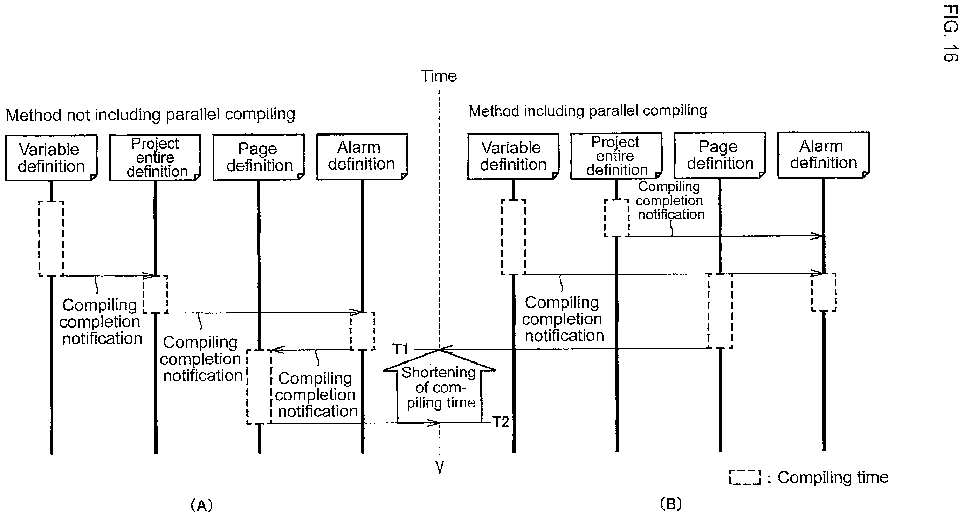

Fig. 16 is a view illustrating shortening of the compiling required time by parallel compiling of the first embodiment. Fig. 16(A) illustrates time T2 necessary for the case that the source code (compiling unit) of the constituent detected as the recompiling object is compiled without referring to the dependence relationship of the graph SG2, and Fig. 16(B) illustrates the time T1 necessary for the case that the compiling unit of the constituent detected as the recompiling object is compiled while the parallel compiling is included based on the dependence relationship of the graph SG2.

In Fig. 16(A), the time T2 is necessary for the completion of the compiling because the compiling units of the constituents detected as the recompiling object are sequentially compiled in a predetermined order. On the other hand, in Fig. 16(B), the compiling can be completed within the time T1 shorter than the time T2 (time T1 < time T2) by performing (simultaneously) parallel compiling on at least two compiling units, even if the constituents detected as the same recompiling object are compiled.

A modification of the dependence relationship detection processing will be described below. In the modification, the dependence relationship processor 214 detects the dependence relationship only for the recompiled portion, and produces the dependence relationship graph SG (updates the original dependence relationship graph SG). According to this method, the dependence relationship can be detected at high speed to produce the dependence relationship graph SG compared with the case that the whole HMI program is analyzed to produce the dependence relationship graph.

The dependence relationship processor 214 detects the dependence relationship from the executable code of the executable HMI program EP in which the dependence relationship can relatively easily be detected. However, the detection source may be the source code of the HMI program or the source code of an intermediate language obtained in a process of the compiling. A lexical analysis, a syntactic analysis, and a semantic analysis are required in the case where the dependence relationship is detected from the source code of the intermediate language obtained in the process of the compiling. On the other hand, these analyses are not required in the executable code, but the dependence relationship can easily be detected at high speed.

A compiling time may be changed according to a frequency of changing the constituent of the HMI program. For example, the constituent is compiled on a background during the editing of the program when the number of times (change frequency) changed within a predetermined time is less than or equal to a threshold. When the frequency is larger than the threshold, the constituent is compiled after the completion of the editing. Therefore, the whole compiling time of the HMI program can be shortened.

In the first embodiment, the PC 100 includes the HMI program producing environment including the compiling. Alternatively, the programmable terminal 4 may include the HMI program producing environment including the compiling. The PC 100 may be a tablet type terminal.

### [Second Embodiment]

A second embodiment is a modification of the first embodiment. In the second embodiment, the HMI program shares information such as a variable and a function of another application program. For example, another application program can include the program executed by the programmable terminal 4 (corresponding to another program producing device). In this case, the table TB includes the kind TB1, the kind TB2 of the change, and the propagation destination TB3 and propagation form TB4 of the dependence relationship with respect to the shared constituent.

In the case where the HMI program and another application program are developed in the PC 100, a change notification based on the dependence relationship is output to the PC 100 when the definition of the variable and function of another application program is changed. When receiving the change notification, the compiling unit 212 of the PC 100 searches the table TB based on a notification content (the kind and change content of the constituent), and detects another constituent having the dependence relationship on which the change has an influence. The detected constituent is specified as the compiling object, and the specified constituent is compiled on the background.

Similarly, in the programmable terminal 4, the constituent is compiled on the background when the change notification of the shared constituent is received from the PC 100. The external device including the program sharing the constituent of the HMI program of the PC 100 is not limited to the programmable terminal 4.

In the case where the HMI program cooperating with another application program is produced (edited, or compiled) or debugged on the PC 100, the HMI program already compiled on the background as described above can be used.

Therefore, even if another application program of the program producing device of a cooperation destination is changed, the compiling required time of the HMI program is not lengthened. Debug efficiency is improved in the case where the debug is performed while the HMI program is compiled.

### [Third Embodiment]

A third embodiment provides a program in which the method for compiling and producing the HMI program is performed by the CPU 110 of the PC 100 or the CPU 411 of the programmable terminal 4.

The program can be recorded in a computer-readable recording medium such as a flexible disk, CD-ROM (Compact Disk-Read Only Memory), the ROM, and the RAM included in the PC 100 or the programmable terminal 4 or the memory cards 106, 420 to be provided as a program product. Alternatively, the program can be recorded in a recording medium such as the hard disk drive 114 to be provided. The program can also be provided by downloading the program from a network (not illustrated) through the communication interfaces 124, 419.

In the program, necessary modules may be called in a predetermined arrangement at predetermined timing in program modules provided as a part of the OS of the PC 100 or programmable terminal 4 to perform the program. In this case, the modules are not included in the program itself, but the processing is performed in conjunction with the OS. The program that does not include the modules can be included in the program of the third embodiment.

The program of the third embodiment may be provided while incorporated in a part of another program. In this case, the modules included in the other program are not included in the program itself, but the processing is performed in conjunction with the other program. The program incorporated in the other program can be included in the program of the third embodiment.

The provided program product is performed while installed in a program storage such as a hard disk drive. The program product includes a program and a recording medium in which the program is recorded.

### [Advantages of the embodiments]

As a background of the embodiments, in the method of compiling the program to produce the executable code, compiling time is required compared with an "interpreter type". Therefore, it takes a time to become executable. Specifically, a cycle of "compiling → program correction → program execution" is repeated in the case where the executable code is produced by the compiling.

On the other hand, in the embodiments, the compiling object is limited to the changed constituents during the recompiling of the HMI program, the parallel compiling is performed on the constituents that can be compiled in parallel, and the compiling unit of the constituents is compiled according to the previously designated particle size, thereby shortening the compiling required time in the cycle (see Fig. 16). Therefore, development efficiency of the HMI program can be improved.

It is to be understood that the disclosed embodiments are illustrative only, but are not restrictive. The scope of the present invention is indicated by not the above description but the claims, and is intended to include the meanings equivalent to the claims and all the changes in the scope of the present invention.

- 4: Programmable terminal
- 100: PC
- 200: Program development unit
- 210: Program producing unit
- 211: Program editor
- 212: Compiling unit
- 213: Compiling object detector
- 214: Dependence relationship processor
- 215: Parallel object detector
- 216: Transfer unit
- 224: Storage
- 230: Runtime
- EP: Executable HMI program
- PR: HMI program
- SC: Source code
- SC2: Parallel compiling information
- SG: Dependence relationship graph
- SG1: Partial graph
- SG2: Simplified graph
- SV: Source code change information
- T1, T2: Time
- TB: Table

## Claims

1. A program producing device (100) that produces a Human Machine Interface (HMI) program for Factory Automation (FA), the program including a plurality of constituents,
the program producing device (100) comprising
a storage (224) that is configured to store correlation information (TB) in which for each constituent at least one change content of the constituent and another constituent having a dependence relationship on which the change has an influence is correlated with each other;
a program editor (211) that is configured to
receive a user's content for editing and store the editing content in the storage (224), wherein the editing content includes source code change information (SV) in which changed program constituents are listed;
edit a source code (SC) of the storage (224) according to the editing content, and
store the edited source code (SCN) in the storage (224); and
a compiling unit (212) that is configured to compile the program based on the source code change information (SV) and a dependence relationship graph (SG), and includes:
a compiling object detector (213) that, when at least one constituent is changed, is configured to
detect at least one other constituent, that is correlated with the change content and the changed constituent, as an object to be compiled from the plurality of constituents,
extract the other constituent from the edited source code (SCN) and compile the extracted constituent, and
output a compiling deliverable including an executable HMI program (EP); and
a dependence relationship processor (214) configured to generate from the compiling deliverable based on the correlation information (TB), every time a compiling is performed, the dependence relationship graph (SG) that is information indicating a dependence relationship between the plural constituents of the HMI program, and store and update the dependence relationship graph (SG) in the storage (224) for a next compiling.

2. The program producing device (100) according to claim 1, further comprising a parallel object detector (215) that detects a set of constituents that do not have the dependence relationship with each other as the object to be compiled in parallel in the plurality of constituents detected as the object.

3. The program producing device (100) according to claim 2, further comprising a dependence relationship processor (214) that extracts the dependence relationship of the plurality of constituents detected as the object from the correlation information when the compiling is performed.

4. The program producing device (100) according to claim 3, wherein the object detector (215) detects the constituents that become the object to be compiled in parallel based on the extracted dependence relationship.

5. The program producing device (100) according to claim 3 or 4, wherein the compiling unit (215) decides a compiling order of the plurality of constituents detected as the object based on the extracted dependence relationship.

6. The program producing device (100) according to any one of claims 1 to 5, wherein the object detector (215) detects at least one constituent that becomes the object to be compiled from the plurality of constituents of the compiled program.

7. The program producing device (100) according to any one of claims 1 to 6, wherein
the plurality of constituents of the program include a constituent shared with another program, and
when the shared constituent is changed, a notification of a change content is output to the other program.

8. The program producing device (100) according to any one of claims 1 to 7, wherein a compiling time is changed according to a change frequency with respect to each constituent of the program.

9. The program producing device (100) according to any one of claims 1 to 8, wherein the correlation information (TB) includes a kind (TB1) of the constituent, a kind (TB2) of the change that can be performed on the constituent, a propagation destination (TB3) of the dependence relationship, and a propagation form (TB4) of the dependence relationship.

10. A program causing a computer to perform a method for producing a Human Machine Interface (HMI) program for Factory Automation (FA), the HMI program including a plurality of constituents, the method comprising the steps of:
storing correlation information (TB) in which for each constituent at least one change content of the constituent and another constituent having a dependence relationship on which the change has an influence is correlated with each other;
receiving a user's content for editing and storing the editing content, wherein the editing content includes source code change information (SV) in which changed program constituents are listed;
editing a source code (SC) of the storage (224) according to the editing content,
storing the edited source code (SCN); and
compiling the program based on the source code change information (SV) and a dependence relationship graph (SG), wherein the compiling includes, when at least one constituent is changed:
detecting at least one other constituent, that is correlated with the change content and the changed constituent, as an object to be compiled from the plurality of constituents based on the correlation information (TB);
extract the other constituent from the edited source code (SCN) and compiling the extracted constituent, and
outputting a compiling deliverable including an executable HMI program (EP); and
generating from the compiling deliverable based on the correlation information (TB), every time a compiling is performed, the dependence relationship graph (SG) that is information indicating a dependence relationship between the plural constituents of the HMI program, and storing and updating the dependence relationship graph (SG) for a next compiling.

## Patentansprüche

1. Programmerzeugungsvorrichtung (100), die ein Mensch-Maschine-Schnittstelle(HMI)-Programm zur Fabrikautomatisierung (FA) erzeugt, wobei das Programm mehrere Bestandteile enthält,
wobei die Programmerzeugungsvorrichtung (100) aufweist:
einen Speicher (224), der ausgelegt ist, Korrelationsinformationen (TB), in denen für jeden Bestandteil mindestens ein Änderungsinhalt des Bestandteils und ein anderer Bestandteil, der eine Abhängigkeitsbeziehung aufweist, in der die Änderung einen Einfluss aufweist, miteinander korreliert sind;
einen Programmeditor (211), der ausgelegt ist,
einen Nutzerinhalt zum Editieren und Speichern des Editionsinhaltes in dem Speicher (224) zu empfangen, wobei der Editionsinhalt Quellencodeänderungsinformationen (SV) enthält, in denen geänderte Programmbestandteile aufgelistet sind;
einen Quellencode (SC) des Speichers (224) entsprechend dem Editierungsinhalt zu editieren, und
den editierten Quellencode (SCN) in dem Speicher (224) zu speichern; und
eine Kompilierungseinheit (212), die ausgelegt ist, das Programm auf der Grundlage der Quellencodeänderungsinformationen (SV) und eines Abhängigkeitsbeziehungsgraphen (SG) zu kompilieren, und die enthält:
einen Kompilierungsobjektdetektor (213), der, wenn mindestens ein Bestandteil geändert wird, ausgelegt ist,
aus den Bestandteilen mindestens einen anderen Bestandteil, der mit dem Änderungsinhalt und dem geänderten Bestandteil korreliert ist, als ein zu kompilierendes Objekt zu erfassen,
den anderen Bestandteil aus dem editierten Quellencode (SCN) zu extrahieren und den extrahierten Bestandteil zu kompilieren, und
ein Kompilierungsergebnis, das ein ausführbares HMI-Programm (EP) enthält, auszugeben; und
einen Abhängigkeitsbeziehungsprozessor (214), der ausgelegt ist, aus dem Kompilierungsergebnis auf der Grundlage der Korrelationsinformationen (TB) jedes Mal, wenn eine Kompilierung durchgeführt wird, den Abhängigkeitsbeziehungsgraphen (SG) zu erzeugen, der eine Information ist, die eine Abhängigkeitsbeziehung zwischen den Bestandteilen des HMI-Programms angibt, und den Abhängigkeitsbeziehungsgraphen (SG) in dem Speicher (224) für eine nächste Kompilierung zu speichern und zu aktualisieren.

2. Programmerzeugungsvorrichtung (100) nach Anspruch 1, die außerdem einen Parallelobjektdetektor (215) aufweist, der einen Satz von Bestandteilen, die nicht die Abhängigkeitsbeziehung untereinander aufweisen, als das zu kompilierende Objekt parallel in den Bestandteilen, die als das Objekt erfasst werden, erfasst.

3. Programmerzeugungsvorrichtung (100) nach Anspruch 2, die außerdem einen Abhängigkeitsbeziehungsprozessor (214) aufweist, der die Abhängigkeitsbeziehung der Bestandteile, die als das Objekt erfasst werden, aus den Korrelationsinformation extrahiert, wenn das Kompilieren durchgeführt wird.

4. Programmerzeugungsvorrichtung (100) nach Anspruch 3, wobei der Objektdetektor (215) die Bestandteile, die zu dem zu kompilierenden Objekt werden, parallel auf der Grundlage der extrahierten Abhängigkeitsbeziehung erfasst.

5. Programmerzeugungsvorrichtung (100) nach Anspruch 3 oder 4, wobei die Kompilierungseinheit (215) eine Kompilierungsreihenfolge der Bestandteile, die als das Objekt erfasst werden, auf der Grundlage der extrahierten Abhängigkeitsbeziehung bestimmt.

6. Programmerzeugungsvorrichtung (100) nach einem der Ansprüche 1 bis 5, wobei der Objektdetektor (215) mindestens einen Bestandteil, der zu dem zu kompilierenden Objekt wird, aus den Bestandteilen des kompilierten Programms erfasst.

7. Programmerzeugungsvorrichtung (100) nach einem der Ansprüche 1 bis 6, wobei
die Bestandteile des Programms einen Bestandteil enthalten, der mit einem anderen Programm geteilt wird, und
wenn der geteilte Bestandteil geändert wird, eine Benachrichtigung hinsichtlich eines Änderungsinhaltes an das andere Programm ausgegeben wird.

8. Programmerzeugungsvorrichtung (100) nach einem der Ansprüche 1 bis 7, wobei eine Kompilierungszeit entsprechend einer Änderungshäufigkeit in Bezug auf jeden Bestandteil des Programms geändert wird.

9. Programmerzeugungsvorrichtung (100) nach einem der Ansprüche 1 bis 8, wobei die Korrelationsinformationen (TB) eine Art (TB1) des Bestandteils, eine Art (TB2) der Änderung, die hinsichtlich des Bestandteils durchgeführt werden kann, ein Fortpflanzungsziel (TB3) der Abhängigkeitsbeziehung und eine Fortpflanzungsform (TB4) der Abhängigkeitsbeziehung enthalten.

10. Programm, das bewirkt, dass ein Computer ein Verfahren zum Erzeugen eines Mensch-Maschine-Schnittstelle(HMI)-Programms zur Fabrikautomatisierung (FA) erzeugt, wobei das HMI-Programm mehrere Bestandteile enthält, wobei das Verfahren die folgenden Schritte aufweist:
Speichern von Korrelationsinformationen (TB), in denen für jeden Bestandteil mindestens ein Änderungsinhalt des Bestandteils und ein anderer Bestandteil, der eine Abhängigkeitsbeziehung aufweist, auf die die Änderung einen Einfluss hat, miteinander korreliert sind;
Empfangen eines Nutzerinhaltes zum Editieren und Speichern des Editionsinhalts, wobei der Editionsinhalt Quellencodeänderungsinformationen (SV) enthält, in denen geänderte Programmbestandteile aufgelistet sind;
Editieren eines Quellencodes (SC) des Speichers (224) entsprechend dem Editionsinhalt,
Speichern des editierten Quellencodes (SCN); und
Kompilieren des Programms auf der Grundlage der Quellencodeänderungsinformationen (SV) und eines Abhängigkeitsbeziehungsgraphen (SG), wobei, wenn mindestens ein Bestandteil geändert wird, das Kompilieren enthält:
Erfassen mindestens eines anderen Bestandteils, der mit dem Änderungsinhalt und dem geänderten Bestandteil korreliert ist, als ein zu kompilierendes Objekt aus den Bestandteilen auf der Grundlage der Korrelationsinformationen (TB);
Extrahieren des anderen Bestandteils aus dem editierten Quellencode (SCN) und Kompilieren des extrahierten Bestandteils, und
Ausgeben eines Kompilierungsergebnisses, das ein ausführbares HMI-Programm (EP) enthält; und
Erzeugen des Abhängigkeitsbeziehungsgraphen (SG), der eine Information ist, die eine Abhängigkeitsbeziehung zwischen den Bestandteilen des HMI-Programms angibt, aus dem Kompilierungsergebnis auf der Grundlage der Korrelationsinformationen (TB) jedes Mal, wenn eine Kompilierung durchgeführt wird, und Speichern und Aktualisieren des Abhängigkeitsbeziehungsgraphen (SG) für eine nächste Kompilierung.

## Revendications

1. Dispositif de production de programme (100) qui produit un programme d'interface homme-machine (HMI) pour l'automatisation industrielle (FA), le programme incluant une pluralité de composants,
le dispositif de production de programme (100) comprenant
une mémoire (224) qui est configurée de manière à stocker des informations de corrélation (TB) dans lesquelles, pour chaque composant, au moins un contenu de modification du composant et un contenu de modification d'un autre composant présentant une relation de dépendance sur laquelle la modification a une influence, sont mutuellement corrélés ;
un éditeur de programme (211) qui est configuré de manière à
recevoir le contenu d'un utilisateur pour éditer et stocker le contenu d'édition dans la mémoire (224), dans lequel le contenu d'édition inclut des informations de modification de code source (SV) dans lesquelles les composants de programme modifiés sont répertoriés ;
éditer un code source (SC) de la mémoire (224) selon le contenu d'édition ; et
stocker le code source édité (SCN) dans la mémoire (224), et
une unité de compilation (212) qui est configurée de manière à compiler le programme sur la base des informations de modification de code source (SV) et d'un graphe de relation de dépendance (SG), et qui inclut :
un détecteur d'objet de compilation (213) qui, lorsqu'au moins un composant est modifié, est configuré de manière à
détecter au moins un autre composant, qui est corrélé avec le contenu de modification et le composant modifié, en tant qu'un objet à compiler, parmi la pluralité de composants,
extraire l'autre composant du code source édité (SCN) et compiler le composant extrait, et
fournir en sortie un produit livrable de compilation incluant un programme d'interface HMI exécutable (EP) ; et
un processeur de relation de dépendance (214) configuré de manière à générer, à partir du produit livrable de compilation, sur la base des informations de corrélation (TB), à chaque fois qu'une compilation est mise en œuvre, le graphe de relation de dépendance (SG), lequel correspond à des informations indiquant une relation de dépendance entre les multiples composants du programme d'interface HMI, et à stocker et à mettre à jour le graphe de relation de dépendance (SG) dans la mémoire (224) en vue d'une compilation ultérieure.

2. Dispositif de production de programme (100) selon la revendication 1, comprenant en outre un détecteur d'objet parallèle (215) qui détecte un ensemble de composants qui ne présentent pas la relation de dépendance les uns avec les autres, en tant que l'objet à compiler en parallèle dans la pluralité de composants détectés en tant que l'objet.

3. Dispositif de production de programme (100) selon la revendication 2, comprenant en outre un processeur de relation de dépendance (214) qui extrait la relation de dépendance de la pluralité de composants détectés en tant que l'objet, à partir des informations de corrélation, lorsque la compilation est mise en œuvre.

4. Dispositif de production de programme (100) selon la revendication 3, dans lequel le détecteur d'objet (215) détecte les composants qui deviennent l'objet à compiler en parallèle, sur la base de la relation de dépendance extraite.

5. Dispositif de production de programme (100) selon la revendication 3 ou 4, dans lequel l'unité de compilation (215) détermine un ordre de compilation de la pluralité de composants détectés en tant que l'objet, sur la base de la relation de dépendance extraite.

6. Dispositif de production de programme (100) selon l'une quelconque des revendications 1 à 5, dans lequel le détecteur d'objet (215) détecte au moins un composant qui devient l'objet à compiler parmi la pluralité de composants du programme compilé.

7. Dispositif de production de programme (100) selon l'une quelconque des revendications 1 à 6, dans lequel
la pluralité de composants du programme inclut un composant partagé avec un autre programme, et
lorsque le composant partagé est modifié, une notification d'un contenu de modification est fournie en sortie à l'autre programme.

8. Dispositif de production de programme (100) selon l'une quelconque des revendications 1 à 7, dans lequel un temps de compilation est modifié selon une fréquence de modification par rapport à chaque composant du programme.

9. Dispositif de production de programme (100) selon l'une quelconque des revendications 1 à 8, dans lequel les informations de corrélation (TB) incluent un type (TB1) du composant, un type (TB2) de la modification qui peut être mise en œuvre sur le composant, une destination de propagation (TB3) de la relation de dépendance, et une forme de propagation (TB4) de la relation de dépendance.

10. Programme amenant un ordinateur à mettre en œuvre un procédé de production d'un programme d'interface homme-machine (HMI) pour l'automatisation industrielle (FA), le programme d'interface HMI incluant une pluralité de composants, le procédé comprenant les étapes ci-dessous consistant à :
stocker des informations de corrélation (TB) dans lesquelles, pour chaque composant, au moins un contenu de modification du composant et un contenu de modification d'un autre composant présentant une relation de dépendance sur laquelle la modification a une influence, sont mutuellement corrélés ;
recevoir le contenu d'un utilisateur pour éditer et stocker le contenu d'édition, dans lequel le contenu d'édition inclut des informations de modification de code source (SV) dans lesquelles les composants de programme modifiés sont répertoriés ;
éditer un code source (SC) de la mémoire (224) selon le contenu d'édition,
stocker le code source édité (SCN) ; et
compiler le programme sur la base des informations de modification de code source (SV) et d'un graphe de relation de dépendance (SG), dans lequel l'étape de compilation inclut, lorsqu'au moins un composant est modifié, les étapes ci-dessous consistant à :
détecter au moins un autre composant, qui est corrélé avec le contenu de modification et le composant modifié, en tant qu'un objet à compiler, parmi la pluralité de composants, sur la base des informations de corrélation (TB) ;
extraire l'autre composant du code source édité (SCN) et compiler le composant extrait, et
fournir en sortie un produit livrable de compilation incluant un programme d'interface HMI exécutable (EP) ; et
générer, à partir du produit livrable de compilation, sur la base des informations de corrélation (TB), à chaque fois qu'une compilation est mise en œuvre, le graphe de relation de dépendance (SG), lequel correspond à des informations indiquant une relation de dépendance entre les multiples composants du programme d'interface HMI, et stocker et mettre à jour le graphe de relation de dépendance (SG) en vue d'une compilation ultérieure.
